# EUROPEAN PATENT APPLICATION

(11) **EP 4 379 003 A1**
(43) Date of publication of application: **05.06.2024**
(21) Application number: 22849599.0
(22) Date of filing: 28.07.2022
(51) Int. Cl.: C08L 83/04, C08K 3/01, C08K 3/22, C08L 83/05, C08L 83/06, C08L 83/07

(54) **THERMALLY CONDUCTIVE COMPOSITION AND CURED PRODUCT**

(30) Priority: 29.07.2021 JP 2021124791
(71) Applicant: Sekisui Polymatech Co., Ltd., Saitama-city, Saitama 338-0837 (JP)
(72) Inventor: IWAMOTO, Tatsuya, Saitama-city, Saitama 338-0837 (JP); KANEKO, Toshiki, Saitama-city, Saitama 338-0837 (JP); UMETANI, Hiroshi, Saitama-city, Saitama 338-0837 (JP)
(74) Representative: Ter Meer Steinmeister & Partner
(86) International application number: PCT/JP2022/029201
(87) International publication number: WO 2023/008538

(57) **Abstract**

A thermally conductive composition of the present invention comprises a silicone base material, a viscosity reducing agent, and a thermally conductive filler, wherein a ratio between a weight-average molecular weight Mw1 of the silicone base material and a weight-average molecular weight Mw2 of the viscosity reducing agent (Mw1/Mw2) is 0.5 or more and 8.5 or less. The present invention can provide a thermally conductive composition comprising a silicone base material, a viscosity reducing agent, and a thermally conductive filler, which has a high effect of reducing viscosity.

## Description

### Technical Field

The present invention relates to a thermally conductive composition and a cured product thereof.

### Background Art

As thermally conductive compositions, curable and liquid ones are widely known. The thermally conductive composition is packed between a heating element and a heat sink, and then cured to form a cured product, which is used as a heat-conducting member for transferring the heat generated by the heating element to the heat sink.
As such thermally conductive compositions, those containing a silicone base material and a thermally conductive filler are used in many cases. In general, in order to improve heat radiation, increase in content of the thermally conductive filler is required. The increase in content of the thermally conductive filler, however, results in increase in viscosity of the thermally conductive composition, so that handleability thereof deteriorates. Therefore, use of a viscosity reducing agent to reduce viscosity of the thermally conductive composition has been studied in various ways.

Specifically, decrease in viscosity of the resin component by using a silicone base material and a viscosity reducing agent having viscosity as low as possible, addition of a lowviscosity viscosity reducing agent as much as possible, and use of a viscosity reducing agent having a structure excellent in dispersing a thermally conductive filler have been studied.
For example, in PTL 1 to 4, addition of an organopolysiloxane having a specific structure to a thermally conductive composition containing a silicone base material and a thermally conductive filler is disclosed.

### Citation List

### Patent Literature

PTL 1: JP 2009-286855A
PTL 2: JP 2013-091683A
PTL 3: JP 2013-227374A
PTL 4: WO 2002/092693

### Summary Of Invention

### Technical Problem

Although such conventional techniques are known, considering the curability of the thermally conductive composition and the physical properties after curing, increase in the amount of the viscosity reducing agent added is impracticable, so that decrease in viscosity of the composition is limited. Although various structures of viscosity reducing agents have been proposed and an approach has been taken to use a plurality of viscosity reducing agents having a different structure in combination, there is currently a limit to decrease in viscosity of the composition.

Accordingly, an object of the present invention is to provide a thermally conductive composition comprising a silicone base material, a viscosity reducing agent, and a thermally conductive filler, which has a high effect of reducing viscosity.

### Solution to Problem

As a result of intensive studies, the present inventors have found that a thermally conductive composition comprising a silicone base material, a viscosity reducing agent, and a thermally conductive filler, having a ratio between a weight-average molecular weight Mw1 of the silicone base material and a weight-average molecular weight Mw2 of the viscosity reducing agent (Mw1/Mw2) within a specific range, enables to effectively reduce the viscosity of the thermally conductive composition, and have completed the present invention. In other words, the present invention provides the following items [1] to [8].

[1] A thermally conductive composition comprising a silicone base material, a viscosity reducing agent, and a thermally conductive filler, having a molecular weight ratio between a weight-average molecular weight Mw1 of the silicone base material and a weight-average molecular weight Mw2 of the viscosity reducing agent (Mw1/Mw2) of 0.5 or more and 8.5 or less.
[2] The thermally conductive composition according to item [1], wherein the silicone base material comprises an alkenyl group-containing organopolysiloxane and a hydrogen organopolysiloxane.
[3] The thermally conductive composition according to item [1] or [2], wherein the viscosity reducing agent is a compound having an alkoxy group.
[4] The thermally conductive composition according to any one of items [1] to [3], wherein the viscosity reducing agent has a structure represented by the following formula (1). 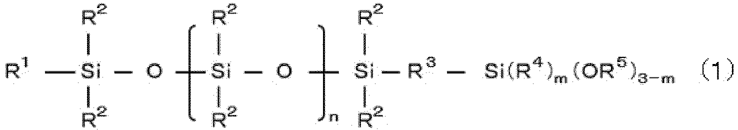 wherein R¹, R², R⁴ and R⁵ are each independently a saturated hydrocarbon group, R³ is an oxygen atom or a divalent hydrocarbon group, n is an integer of 15 to 315, and m is an integer from 0 to 2.
[5] The thermally conductive composition according to any one of items [1] to [4], wherein the silicone base material has a weight-average molecular weight Mw1 of 10000 to 30000.
[6] The thermally conductive composition according to any one of items [1] to [5], wherein the viscosity reducing agent has a weight-average molecular weight Mw2 of 1150 to 20000.
[7] The thermally conductive composition according to any one of items [1] to [6], having a thermal conductivity of 6 W/m·K or more.
[8] A cured product obtained by curing the thermally conductive composition according to any one of items [1] to [7].

### Advantageous Effects of Invention

According to the present invention, a thermally conductive composition comprising a silicone base material, a viscosity reducing agent, and a thermally conductive filler, which is highly effective in reducing viscosity, can be provided. Accordingly, a thermally conductive composition that has excellent handleability with increased thermal conductivity can be provided.

### Description of Embodiments

### [Thermally conductive composition]

The thermally conductive composition of the present invention will be described in detail below.

The thermally conductive composition of the present invention comprises a silicone base material, a viscosity reducing agent, and a thermally conductive filler, and has a molecular weight ratio between a weight-average molecular weight Mw1 of the silicone base material and a weight-average molecular weight Mw2 of the viscosity reducing agent (Mw1/Mw2) of 0.5 or more and 8.5 or less.

### <Molecular weight and molecular weight ratio>

In the thermally conductive composition of the present invention, the molecular weight ratio between a weight-average molecular weight Mw1 of the silicone base material and a weight-average molecular weight Mw2 of the viscosity reducing agent (Mw1/Mw2) is 0.5 or more and 8.5 or less.

If a molecular weight ratio (Mw1/Mw2) is less than 0.5 or more than 8.5, the effect of reducing viscosity of the thermally conductive composition by addition of the viscosity reducing agent is worsened.

From the viewpoint of improving the effect of reducing viscosity, the molecular weight ratio (Mw1/Mw2) is preferably 0.9 or more and 8.3 or less, more preferably 1.2 or more and 7.2 or less, and still more preferably 1.4 or more and 4.5 or less.

The reason why the effect of reducing viscosity is obtained with a molecular weight ratio (Mw1/Mw2) controlled in the predetermined range as described above is presumed as follows.

That is, with regard to the viscosity of the silicone base material, the viscosity of the thermally conductive composition has a correlation with the viscosity of the silicone base material for the same dispersion state of the thermally conductive filler. Therefore, the smaller the molecular weight of the silicone base material, the lower the viscosity of the thermally conductive composition, and the larger the molecular weight of the silicone base material, the higher the viscosity of the thermally conductive composition. However, with too small a molecular weight of the silicone base material, the hardness of a cured product of the thermally conductive composition tends to increase. It is therefore preferable for obtaining soft thermally conductive composition that the silicone base material have a specified molecular weight which is not too small.

On the other hand, although the effect of reducing viscosity increases with use of a viscosity reducing agent having a small molecular weight due to an increased coverage of the surface of the thermally conductive filler, the compatibility between the silicone base material and the viscosity reducing agent may deteriorate resulting from a large difference in the molecular weight from the silicone base material. In contrast, with use of a viscosity reducing agent having a large molecular weight, the dispersing force that prevents the thermally conductive fillers from agglomerating increases, so that the effect of reducing the viscosity increases. However, the molecular chains of the silicone base material and the viscosity reducing agent entangle, so that viscosity reducing effect may be rather impaired. As a result of examining the preferable range for viscosity reducing effect as a result of the combined action of these factors, it is presumed that the effect of reducing viscosity of the thermally conductive composition has increased in the case where the molecular weight ratio between a weight-average molecular weight Mw1 of the silicone base material and a weight-average molecular weight Mw2 of the viscosity reducing agent (Mw1/Mw2) is 0.5 or more and 8.5 or less.

From the viewpoint of improving the effect of reducing viscosity, the lower limit of the molecular weight ratio (Mw1/Mw2) is preferably 0.9 or more, more preferably 1.2 or more, and still more preferably 1.4 or more. The upper limit of the molecular weight ratio (Mw1/Mw2) is preferably 8.3 or less, more preferably 7.2 or less, and still more preferably 4.5 or less.

The weight-average molecular weight Mw1 of the silicone base material is not particularly limited, and preferably 10000 to 30000, more preferably 12000 to 29500, and still more preferably 14500 to 29000.
When a weight-average molecular weight Mw1 of the silicone base material is equal to or more than these lower limit values, crosslinking proceeds easily in curing of the thermally conductive composition, and the desired physical properties are easily imparted to a cured product. When a weight-average molecular weight of the silicone base material is equal to or less than these upper limit values, the viscosity of the thermally conductive composition is easily lowered.

In the present specification, the range indicated by "to" means a range from the predetermined numerical value prefixed to "to" or more to the predetermined numerical value postfixed to "to" or less.

The lower limit of the weight-average molecular weight Mw1 of the silicone base material is not particularly limited, preferably 10000 or more, more preferably 12000 or more, and still more preferably 14500 or more. When a weight-average molecular weight Mw1 of the silicone base material is equal to or more than these lower limit values, crosslinking proceeds easily in curing of the thermally conductive composition, and the desired physical properties are easily imparted to a cured product.

On the other hand, the upper limit of the weight-average molecular weight Mw1 of the silicone base material is not particularly limited, preferably 30000 or less, more preferably 29500 or less, and still more preferably 29000 or less. When a weight-average molecular weight of the silicone base material is equal to or less than these upper limit values, the viscosity of the thermally conductive composition is easily reduced.

The weight-average molecular weight Mw2 of the viscosity reducing agent is not particularly limited, preferably 1150 to 20000, more preferably 1300 to 18000, and still more preferably 1500 to 15000.

When a weight-average molecular weight Mw2 of the viscosity reducing agent is in such a range, the molecular weight ratio (Mw1/Mw2) is easily adjusted to the desired range while controlling the weight-average molecular weight Mw1 of the silicone base material to the range described above. As a result, a cured product is easily formed, while improving the effect of reducing viscosity of the thermally conductive composition.

In the present specification, the weight-average molecular weight is the weight-average molecular weight in terms of standard polystyrene measured by gel permeation chromatography (GPC), more specifically being measured by the method described in Examples.

The weight-average molecular weights of the silicone base material and the viscosity reducing agent may be obtained by measuring the silicone base material and the viscosity reducing agent by GPC before preparing the thermally conductive composition (that is, before mixing the two), respectively. Alternatively, after separating the silicone base material and the viscosity reducing agent from the mixture of the silicone base material and the viscosity reducing agent by filtration, the respective components may be measured by GPC.
The separation of the silicone base material and the viscosity reducing agent from the mixture may be performed, for example, by Ultra Performance Liquid Chromatography (UPLC).

The lower limit of the weight-average molecular weight Mw2 of the viscosity reducing agent is not particularly limited, and is preferably 1150 or more, more preferably 1300 or more, and still more preferably 1500 or more. When the lower limit of the weight-average molecular weight Mw2 of the viscosity reducing agent is as described above, the molecular weight ratio (Mw1/Mw2) is easily adjusted to the desired range while controlling the weight-average molecular weight Mw1 of the silicone base material to the range described above. As a result, a cured product is easily formed while improving the effect of reducing viscosity of the thermally conductive composition.

The upper limit of the weight-average molecular weight Mw2 of the viscosity reducing agent is not particularly limited, and is preferably 20000 or less, more preferably 18000 or less, and still more preferably 15000 or less. When the upper limit of the weight-average molecular weight Mw2 of the viscosity reducing agent is as described above, the molecular weight ratio (Mw1/Mw2) is easily adjusted to the desired range while controlling the weight-average molecular weight Mw1 of the silicone base material to the range described above. As a result, a cured product is easily formed while improving the effect of reducing viscosity of the thermally conductive composition.

### <Viscosity and viscosity ratio>

The viscosity ratio between the viscosity V1 at 25°C of the silicone base material contained in the thermally conductive composition of the present invention and the viscosity V2 at 25°C of the viscosity reducing agent (V1/V2) is preferably 0.5 or more and 15 or less, more preferably 0.7 or more and 12 or less, still more preferably 1.0 or more and 10 or less, and still more preferably 1.4 or more and 7 or less. When a viscosity ratio (V1/V2) is adjusted to the above ranges, the effect of reducing the viscosity of the thermally conductive composition by addition of the viscosity reducing agent is easily improved.

The lower limit of the viscosity ratio between the viscosity V1 at 25°C of the silicone base material contained in the thermally conductive composition of the present invention and the viscosity V2 at 25°C of the viscosity reducing agent (V1/V2) is preferably 0.5 or more, more preferably 0.7 or more, still more preferably 1.0 or more, and still more preferably 1.4 or more. When a lower limit of the viscosity ratio (V1/V2) is adjusted to the above ranges, the effect of reducing the viscosity of the thermally conductive composition by addition of the viscosity reducing agent is easily improved.

On the other hand, the upper limit of the viscosity ratio between the viscosity V1 at 25°C of the silicone base material contained in the thermally conductive composition of the present invention and the viscosity V2 at 25°C of the viscosity reducing agent (V1/V2) is preferably 15 or less, more preferably 12 or less, still more preferably 10 or less, and still more preferably 7 or less. When a viscosity ratio (V1/V2) is adjusted to the above ranges, the effect of reducing the viscosity of the thermally conductive composition by addition of the viscosity reducing agent is easily improved.

The viscosity V1 of the silicone base material at 25°C is not particularly limited, preferably 50 to 800 mPa·s, more preferably 80 to 600 mPa·s, and still more preferably 100 to 500 mPa·s.

When a viscosity V1 of the silicone base material is equal to or more than these lower limit values, crosslinking readily proceeds in the following curing of the thermally conductive composition, and desired physical properties are easily imparted to a cured product. When a viscosity V1 of the silicone base material is equal to or less than these upper limit values, the viscosity of the thermally conductive composition is easily reduced.

The lower limit of the viscosity V1 of the silicone base material at 25°C is not particularly limited, -preferably 50 mPa·s or more, more preferably 80 mPa·s or more, and still more preferably 100 mPa·s or more. When a viscosity V1 of the silicone base material is equal to or more than these lower limit values, crosslinking readily proceeds in the following curing of the thermally conductive composition, and desired physical properties are easily imparted to a cured product.

On the other hand, the upper limit of the viscosity V1 of the silicone base material at 25°C is not particularly limited, preferably 800 mPa·s or less, more preferably 600 mPa·s or less, and still more preferably 500 mPa·s or less. When a weight-average molecular weight of the silicone base material is equal to or less than these upper limit values, the viscosity of the thermally conductive composition is easily reduced.

The viscosity V2 of the viscosity reducing agent at 25°C is not particularly limited, preferably 5 to 300 mPa·s, more preferably 7 to 250 mPa·s, and still more preferably 10 to 200 mPa·s.

When a viscosity V2 of the viscosity reducing agent is in such a range, the viscosity ratio (V1/V2) is easily adjusted to the desired range while controlling the viscosity V1 of the silicone base material to the range described above. As a result, a cured product is easily formed while improving the effect of reducing viscosity of the thermally conductive composition.

The viscosity V1 of the silicone base material at 25°C and the viscosity V2 of the viscosity reducing agent at 25°C are measured by the method described in Examples.

The lower limit of the viscosity V2 of the viscosity reducing agent at 25°C is not particularly limited, preferably 5 mPa·s or more, more preferably 7 mPa·s or more, and still more preferably 10 mPa·s or more. When a lower limit of the viscosity V2 of the viscosity reducing agent is in such a range, the viscosity ratio (V1/V2) is easily adjusted to the desired range while controlling the viscosity V1 of the silicone base material to the range described above. As a result, a cured product is easily formed while improving the effect of reducing the viscosity of the thermally conductive composition.

On the other hand, the upper limit of the viscosity V2 of the viscosity reducing agent at 25°C is not particularly limited, preferably 300 mPa·s or less, more preferably 250 mPa·s or less, and still more preferably 200 mPa·s or less. When an upper limit of the viscosity V2 of the viscosity reducing agent is in such a range, the viscosity ratio (V1/V2) is easily adjusted to the desired range while controlling the viscosity V1 of the silicone base material to the range described above. As a result, a cured product is easily formed while improving the effect for reducing viscosity of the thermally conductive composition.

### <Silicone base material>

Examples of the silicone base material contained in the thermally conductive composition of the present invention include a reaction-curable silicone and a non-reactive silicone, and it is preferable that at least a reaction-curable silicone be contained.

The reaction-curable silicone is an organopolysiloxane having a reactive group capable of forming a crosslinked structure. Examples thereof include an addition reaction-curable silicone, a radical reaction-curable silicone, a condensation reaction-curable silicone, a UV or electron beam-curable silicone, and a moisture-curable silicone. Among these, an addition reaction-curable silicone is preferred as the silicone base material.

As the addition reaction-curable silicone, one containing an alkenyl group-containing organopolysiloxane (base material) and a hydrogen organopolysiloxane (curing agent) is more preferred.

It is preferable that the alkenyl group-containing organopolysiloxane be an organopolysiloxane having at least two alkenyl groups in one molecule. Examples of the alkenyl group include, but are not particularly limited to, those having 2 to 8 carbon atoms, such as a vinyl group, an allyl group, a butenyl group, a pentenyl group, a hexenyl group, a heptenyl group, and an octenyl group. The alkenyl group-containing organopolysiloxanes may be used alone or in combination of two or more.

It is preferable that the hydrogen organopolysiloxane be a hydrogen organopolysiloxane having at least two hydrosilyl groups in one molecule. The hydrosilyl group means a hydrogen atom bonded to a silicon atom (SiH group). Hydrogen organopolysiloxanes may be used alone or in combination of two or more.
The addition reaction-curable silicone causes a curing reaction through an addition reaction to form a matrix made of silicone rubber. Since a silicone rubber is easily deformed by compression, the cured product formed from the thermally conductive composition of the present invention is easily assembled between a heating element and a heat sink.

Examples of the non-reactive silicone include a straight silicone oil such as dimethyl silicone oil and methylphenyl silicone oil, and a non-reactive modified silicone oil having a non-reactive organic group introduced in the main chain having a siloxane bond, in a side chain bonded to the main chain, or at an end of the main chain. Examples of the non-reactive modified silicone oil include a polyether-modified silicone oil, an aralkyl-modified silicone oil, a fluoroalkyl-modified silicone oil, a long-chain alkyl-modified silicone oil, a higher fatty acid ester-modified silicone oil, a higher fatty acid amide-modified silicone oil, and a phenyl-modified silicone oil. Among those described above, a straight silicone oil is preferred as the non-reactive silicone, and among straight silicone oils, a dimethyl silicone oil is more preferred. The non-reactive silicone oils may be used alone or in combination of two or more.

### <Viscosity reducing agent>

The thermally conductive composition of the present invention contains a viscosity reducing agent. The viscosity reducing agent is a compound to be added to a thermally conductive composition to reduce the viscosity.

The viscosity reducing agent is preferably a compound having an alkoxy group, more preferably an organopolysiloxane compound having an alkoxy group. Use of such a compound as viscosity reducing agent improves the effect of reducing viscosity of the thermally conductive composition.

It is preferable that the viscosity reducing agent have a structure represented by the following formula (1): 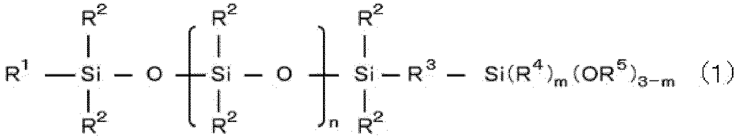 wherein R¹, R², R⁴ and R⁵ are each independently a saturated hydrocarbon group, R³ is an oxygen atom or a divalent hydrocarbon group, n is an integer of 15 to 315, and m is an integer from 0 to 2.

Use of the viscosity reducing agent having the structure represented by the formula (1) further enhances the effect of reducing viscosity of the thermally conductive composition. It is presumed that the viscosity reducing agent represented by the formula (1) having an alkoxy group at a terminal easily reacts or interacts with functional groups present on the surface of the thermally conductive filler, and in combination with having a specific polysiloxane structure, friction of the filler is reduced, resulting in easy decrease in the viscosity.

In the formula (1), R¹, R², R⁴ and R⁵ are each independently a saturated hydrocarbon group.

Examples of the saturated hydrocarbon group include an alkyl group such as a linear alkyl group, a branched alkyl group and a cyclic alkyl group, an aryl group, an aralkyl group, and a halogenated alkyl group.

Examples of the linear alkyl group include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group.

Examples of the branched alkyl group include an isopropyl group, a tertiary butyl group, an isobutyl group, a 2-methylundecyl group, and a 1-hexylheptyl group.
Examples of the cyclic alkyl group include a cyclopentyl group, a cyclohexyl group, and a cyclododecyl group.

Examples of the aryl group include a phenyl group, a tolyl group, and a xylyl group. Examples of the aralkyl group include a benzyl group, a phenethyl group, and a 2-(2,4,6-trimethylphenyl)propyl group.

Examples of the halogenated alkyl group include a 3,3,3-trifluoropropyl group and 3-chloropropyl group.

In the formula (1), R¹ to R⁵, m and n are preferably as follows from the viewpoint of enhancing the effect of reducing viscosity.
In the formula (1), R¹ is preferably an alkyl group having 1 to 8 carbon atoms, more preferably an alkyl group having 2 to 6 carbon atoms, and particularly preferably a butyl group.

In the formula (1), R², R⁴ and R⁵ are each independently preferably an alkyl group having 1 to 8 carbon atoms, more preferably an alkyl group having 1 to 4 carbon atoms, and particularly preferably a methyl group.

In the formula (1), R³ is an oxygen atom or a divalent hydrocarbon group, preferably a divalent hydrocarbon group. Examples of the divalent hydrocarbon group include a divalent hydrocarbon group having 1 to 10 carbon atoms, preferably a divalent hydrocarbon group having 1 to 4 carbon atoms. Examples of the divalent hydrocarbon group include a methylene group, an ethylene group, a propylene group, a butylene group, and a methylethylene group, and in particular, an ethylene group is preferred.

In the formula (1), n is an integer of 15 to 315, preferably an integer of 18 to 280, and more preferably an integer of 20 to 220.
In the formula (1), m is an integer of 0 to 2, preferably 0 or 1, and more preferably 0.

In the formula (1), the lower limit of n is an integer of 15 or more, preferably an integer of 18 or more, and more preferably an integer of 20 or more. On the other hand, in the formula (1), the upper limit of n is an integer of 315 or less, preferably an integer of 280 or less, and more preferably an integer of 220 or less.

The content of the viscosity reducing agent in the thermally conductive composition is not particularly limited, and may be appropriately determined according to a viscosity setting of the thermally conductive composition. For example, the content relative to 100 parts by mass of the silicone base material is 5 to 50 parts by mass, preferably 8 to 40 parts by mass, and more preferably 10 to 25 parts by mass. When a content of the viscosity reducing agent is equal to or more than these lower limit values, the viscosity of the thermally conductive composition is easily reduced. When a content of the viscosity reducing agent is equal to or less than these upper limit values, curing of the thermally conductive composition is hardly inhibited, and a cured product with desired physical properties is easily obtained.

The lower limit of the content of the viscosity reducing agent in the thermally conductive composition is not particularly limited, and may be appropriately determined according to the viscosity setting of the thermally conductive composition. For example, the content relative to 100 parts by mass of the silicone base material is 5 parts by mass or more, preferably 8 parts by mass or more, and more preferably 10 parts by mass or more. When a content of the viscosity reducing agent is equal to or more than these lower limit values, the viscosity of the thermally conductive composition is easily reduced.

On the other hand, the upper limit of the content of the viscosity reducing agent in the thermally conductive composition is not particularly limited, and may be appropriately determined according to the viscosity setting of the thermally conductive composition. For example, the content relative to 100 parts by mass of the silicone base material is 50 parts by mass or less, preferably 40 parts by mass or less, and more preferably 25 parts by mass or less. When a content of the viscosity reducing agent is equal to or less than these upper limit values, curing of the thermally conductive composition is hardly inhibited, and a cured product with desired physical properties is easily obtained.

### <Thermally conductive filler>

The thermally conductive composition of the present invention contains a thermally conductive filler. Containing the thermally conductive filler allows the thermally conductive composition and a cured product obtained by curing the thermally conductive composition to have an improved thermal conductivity.

Examples of the thermally conductive filler include a metal, a metal oxide, a metal nitride, a metal hydroxide, a carbon material, an oxides other than metal oxide, a nitride, and a carbide. Examples of the shape of the thermally conductive filler include spherical or amorphous powder.

As the thermally conductive filler, examples of the metal include aluminum, copper, and nickel, examples of the metal oxide include aluminum oxide represented by alumina, magnesium oxide, and zinc oxide, and examples of the metal nitride include aluminum nitride. Examples of the metal hydroxide include aluminum hydroxide. Further, examples of the carbon material include spherical graphite and diamond. Examples of the oxide, nitride, and carbide of other than metals include quartz, boron nitride, and silicon carbide. Among these, a metal oxide, a metal nitride, and a carbon material are preferred as the thermally conductive filler from the viewpoint of improving thermal conductivity, and in particular, aluminum oxide, aluminum nitride, and diamond are more preferred. A metal oxide is preferred and an aluminum oxide is more preferred, as the thermally conductive filler because the viscosity reducing agent has a higher effect of reducing viscosity in that case.

The lower limit of the average particle size of the thermally conductive filler is preferably 0.1 µm or more, more preferably 0.3 µm or more, and even more preferably 0.5 µm or more. The upper limit of the average particle size of the thermally conductive filler is preferably 200 µm or less, more preferably 100 µm or less, and even more preferably 70 µm or less.

The average particle size of the thermally conductive filler is preferably 0.1 to 200 µm, more preferably 0.3 to 100 µm, and still more preferably 0.5 to 70 µm.

As the thermally conductive filler, it is preferable that both a smaller thermally conductive filler with an average particle size of 0.1 µm or more and 5 µm or less and a larger thermally conductive filler with an average particle size of more than 5 µm and 200 µm or less be used in combination. The packing factor may be increased by using thermally conductive fillers with a different average particle size.

The average particle size of the thermally conductive filler may be measured by observing with an electron microscope or the like. More specifically, for example, using an electron microscope or an optical microscope, the particle sizes of 50 arbitrary pieces of thermally conductive filler are measured, and the average value (arithmetic mean value) thereof may be taken as the average particle size.

The content of the thermally conductive filler relative to 100 parts by mass of the silicone base material is preferably 150 to 4000 parts by mass, more preferably 500 to 3500 parts by mass, and still more preferably 1500 to 3000 parts by mass.
The volume-based content of the thermally conductive filler is preferably 50 to 95 vol.%, more preferably 70 to 93 vol.%, and still more preferably 80 to 90 vol.% when the total amount of the thermally conductive composition is set to 100 vol.%.

A content of the thermally conductive filler equal to or more than the lower limit value may imparted a specified thermal conductivity to the thermally conductive composition and a cured product thereof. A content of the thermally conductive filler equal to or less than the upper limit value may appropriately disperse the thermally conductive filler. In addition, the viscosity of the thermally conductive composition is prevented from being increased too much.

The lower limit of the content of the thermally conductive filler relative to 100 parts by mass of the silicone base material is preferably 150 parts by mass or more, more preferably 500 parts by mass or more, and still more preferably 1500 parts by mass or more. The lower limit of the volume-based content of the thermally conductive filler is preferably 50 vol.% or more, more preferably 70 vol.% or more, and still more preferably 80 vol.% or more when the total amount of the thermally conductive composition is set to 100 vol.%. A content of the thermally conductive filler equal to or more than the lower limit value may imparted a specified thermal conductivity the thermally conductive composition and a cured product thereof.

On the other hand, the upper limit of the content of the thermally conductive filler relative to 100 parts by mass of the silicone base material is preferably 4000 parts by mass or less, more preferably 3500 parts by mass or less, and still more preferably 3000 parts by mass or less. The upper limit of the volume-based content of the thermally conductive filler is preferably 95 vol.% or less, more preferably 93 vol.% or less, and still more preferably 90 vol.% or less when the total amount of the thermally conductive composition is set to 100 vol.%. A content of the thermally conductive filler equal to or less than the upper limit value may appropriately disperse the thermally conductive filler. In addition, the viscosity of the thermally conductive composition is prevented from being increased too much.

Various additives may be contained in the thermally conductive composition of the present invention. Examples of the additives include a catalyst, a dispersant, a flame retardant, a plasticizer, an antioxidant, and a colorant.

### <Thermal conductivity>

The thermal conductivity of the thermally conductive composition is not particularly limited, for example, 4 W/m·K or more, preferably 5 W/m·K or more, more preferably 6 W/m·K or more, and practically 15 W/m·K or less. Use of the thermally conductive composition having such a thermal conductivity results in a high thermal conductivity of a cured product thereof. Accordingly, when used between a heating element and a heat sink, heat radiation is improved.

### <Viscosity>

The viscosity Va of the thermally conductive composition of the present invention under conditions at a temperature of 25°C and a shear rate of 1.00 (1/s) is preferably 600 Pa·s or less, more preferably 550 Pa·s or less, and still more preferably 530 Pa·s or less. Having such a viscosity, the thermally conductive composition has improved handleability.
The thixotropic ratio [Viscosity Vb/Viscosity Va] of the thermally conductive composition may be appropriately adjusted according to the application of the thermally conductive composition, being preferably 0.35 or more, more preferably 0.39 or more, and preferably 0.80 or less, more preferably 0.71 or less.

The viscosity Vb means the viscosity of the thermally conductive composition under conditions at a temperature of 25°C and a shear rate of 4.64 (1/s).

The form of the thermally conductive composition of the present invention may be a one-component type or a two-component type that is a combination of a first agent and a second agent, and a two-component type is preferred from the viewpoint of storage stability. In the two-component type thermally conductive composition, the mass ratio between the first agent and the second agent (Second agent/First agent) is preferably 1 or a value close to 1, specifically preferably 0.9 to 1.1, and more preferably 0.95 to 1.05. A mass ratio between the first agent and the second agent of 1 or a value close to 1 easily prepares the thermally conductive composition. In addition, in the two-component type thermally conductive composition, the viscosity ratio between the first agent and the second agent (Second agent/First agent) is also preferably 1 or a value close to 1, specifically preferably 0.5 to 2.0, and more preferably 0.8 to 1.2. When a viscosity ratio between the first agent and the second agent is 1 or a value close to 1, the thermally conductive composition is more easily uniformly mixed. A method for adjusting the mass ratio or the viscosity ratio will be described later.

In the case of using an addition reaction-curable silicone containing an alkenyl group-containing organopolysiloxane (base material) and a hydrogen organopolysiloxane (curing agent), the two-component thermally conductive composition includes more specifically, the first agent containing an alkenyl group-containing organopolysiloxane (base material), and the second agent containing a hydrogen organopolysiloxane (curing agent).
It is preferable that an addition reaction catalyst be contained in the first agent and not contained in the second agent. As a result, the first agent and the second agent are excellent in storage stability before mixing. After mixing, the reaction is accelerated to achieve rapid curing, allowing the thermally conductive member obtained by curing to have various improved physical properties. Although the reason for this is not clear, it is presumed that the addition reaction catalyst such as a platinum catalyst is coordinated with the alkenyl group as the addition reaction site of the base material, allowing curing to proceed easily.

The thermally conductive filler may be contained in at least one of the first agent and the second agent, and is preferably contained in both the first agent and the second agent. When the thermally conductive filler is contained in both the first agent and the second agent, the first agent and the second agent are easily mixed. In addition, the mass ratio and viscosity ratio of the second agent to the first agent are easily controlled to 1 or a value close to 1 in production of the thermally conductive composition, and therefore the resulting composition is easily used as two-component type.

Further, it is preferable that the second agent also contain an alkenyl group-containing organopolysiloxane. When the second agent contain an alkenyl group-containing organopolysiloxane serving as base material in addition to a hydrogen organopolysiloxane as a curing agent, the mass ratio and viscosity ratio of the second agent to the first agent are easily adjusted to 1 or a value close to 1 in production of the thermally conductive composition. On the other hand, it is preferable that the first agent contain no hydrogen organopolysiloxane serving as curing agent.

The thermally conductive composition contains a silicone base material, a viscosity reducing agent, and a thermally conductive filler, and is a thermally conductive composition with a lower viscosity than conventional thermally conductive compositions, that is, a thermally conductive composition having a high effect of reducing viscosity.

### [Cured product]

The thermally conductive composition of the present invention may be cured to form a cured product of the thermally conductive composition.
The thermal conductivity of the cured product is not particularly limited, being, for example, 4 W/m·K or more, preferably 5 W/m·K or more, more preferably 6 W/m·K or more, and practically 15 W/m·K or less. In the present invention, the cured state means, for example, a state with a degree of progress of the curing reaction of 50% or more estimated from the heat of reaction when the heat of reaction until completion of the curing is set to 100% as measured by differential scanning calorimetry (DSC).
The cured product may be placed between a heating element and a heat sink for use as a heat radiating member.

### Examples

The present invention will be described in more detail with reference to Examples in the following, though the present invention is not limited by these Examples.

### [Weight-average molecular weight Mw1 of silicone base material]

Gel permeation chromatography (GPC) (manufactured by Waters Corporation, RI: 2414, autosampler alliance: e2695, guard column: KF-G, column : two Shodex KF806L in series) measurement of a sample taken immediately after mixing a silicone agent A and a silicone agent B to compose a silicone base material was performed to determine the weight-average molecular weight Mw1 of the silicone base material. The weight-average molecular weight is a weight-average molecular weight in terms of standard polystyrene. As standard polystyrene samples ("Shodex Standard SM-105" manufactured by Showa Denko K.K.), nine samples having the following weight-average molecular weights were used. Standard sample No. of each sample (weight-average molecular weight): S-1.3 (1270), S-3.2 (3180), S-6.9 (6940), S-22 (21800), S-53 (52500), S-333 (333000), S-609 (609000), S-1345 (1350000) and S-2704 (2700000). The approximate straight line obtained by plotting the molecular weight against the elution time indicated by the peak top of each standard sample peak was used as a calibration curve. The silicone base material sample was dissolved in tetrahydrofuran to prepare a 0.2 wt% solution, filtered through a 0.2 µm filter, and then used for GPC measurement. The GPC measurement was performed at a column temperature of 40°C, with use of tetrahydrofuran as eluent, at a flow rate of the mobile phase in the column of 1 mL/min.

### [Weight-average molecular weight Mw2 of viscosity reducing agent]

The weight-average molecular weight Mw2 was obtained by measurement performed by GPC in the same manner as for the silicone base material, except that the viscosity reducing agent was used as a sample.

### [Viscosities of Silicone base material and viscosity reducing agent]

The viscosity V1 of the silicone base material at 25°C and the viscosity V2 of the viscosity reducing agent at 25°C each were measured as follows.
Using a rheometer MCR-302e manufactured by Anton Paar, viscosity measurement was performed while continuously changing the shear rate in a range of 10 to 100 (1/sec) at a temperature of the sample adjusted to 25°C with a Peltier plate, using a cone plate with a diameter of 50 mm and an angle of 1°. The viscosity V1 of the silicone base material at 25°C and the viscosity V2 of the viscosity reducing agent at 25°C each mean the viscosity at a shear rate of 10 (1/s).

### [Viscosity of binder]

A sample (binder) taken immediately after mixing a silicone agent A and a silicone agent B to compose a silicone base material and a viscosity reducing agent was used to determine the viscosity of the binder before proceeding of the curing reaction, in the same method for measuring the viscosity V1 of the silicone base material described above.

### [Viscosity of thermally conductive composition]

Using a rheometer MCR-302e manufactured by Anton Paar, viscosity measurement of a sample (thermally conductive composition) taken immediately after mixing a first agent and a second agent was performed while continuously changing the shear rate in a range of 1 to 10 (1/sec) at a temperature of the sample adjusted to 25°C with a Peltier plate, using a parallel plate with a diameter of 25 mm. Each of the viscosity at a shear rate of 1.00 (1/s), the viscosity at a shear rate of 2.15 (1/s), and the viscosity at a shear rate of 4.64 (1/s) is described in Table.

The ratio between the viscosity Va under the conditions at a shear rate of 1.00 (1/sec) and the viscosity Vb under the conditions at a shear rate of 4.64 (1/sec) obtained in the measurement as described above, i.e., (Vb/Va), was defined as thixotropic ratio.

### [Thermal conductivity of thermally conductive composition]

The thermal conductivity of the thermally conductive composition was determined by a method for measuring the thermal resistance using a measuring device in accordance with ASTM D5470-06.

Specifically, the thermally conductive composition was placed as a thick film thicker than the measurement thickness to cover a measurement die on the heating element side, then sandwiched between the die and a heat sink, and compressed to a thickness of the thermally conductive composition to 0.9 mm, 0.8 mm, or 0.7 mm, under a load of 30 psi for measurement of the thermal resistance at each thickness. For these three thermal resistance values, a graph was plotted by taking the thickness on the horizontal axis and the thermal resistance value on the vertical axis, and an approximate straight line fit to the three points was obtained by the least squares method. The slope of the approximate straight line is the thermal conductivity.

The thermal resistance was measured at 80°C using LW-9389 manufactured by Long Win Science and Technology Corporation. The area of the measurement die was 1 inch by 1 inch.

The results in Examples 1 to 16 and Comparative Examples 1 to 9 were evaluated according to the following comprehensive evaluations 1 and 2.

### [Comprehensive evaluation 1]

In the case where the thermally conductive composition had a viscosity Va of 600 Pa·s or less as an acceptance criterion under the condition at a shear rate of 1.00 (1/sec), evaluation was rated as "OK", and in the case where the viscosity Va exceeded 600 Pa·s, evaluation was rated as "NG", not meeting the acceptance criterion.

### [Comprehensive evaluation 2]

The thermally conductive composition in each of Examples and Comparative Examples was evaluated from the relative value (%) of the viscosity Va in each of Examples and Comparative Examples to the viscosity Va of the lowest thermally conductive composition among the same comparative groups that differ only in the type of viscosity reducing agent set to 100%, and the viscosity Va, based on the following criteria. The relative values are the values rounded to integers.
5: The relative value is 100 to 104% and the viscosity Va is 600 Pa·s or less.
4: The relative value is 105 to 129% and the viscosity Va is 600 Pa·s or less.
3: The relative value is 130 to 199% and the viscosity Va is 600 Pa·s or less.
2: The relative value is 200% or more and the viscosity Va is 600 Pa·s or less.
1: The viscosity Va is more than 600 Pa·s.

In the comprehensive evaluation 2 described above, the same comparative groups that differ only in the type of viscosity reducing agent are specifically as follows.
· Examples 1 to 4, Comparative Example 1
· Examples 5 to 7, Comparative Examples 2 to 3
· Examples 8 to 10, Comparative Examples 4 to 5
· Examples 11 to 13, Comparative Examples 6 to 7
· Examples 14 to 16, Comparative Examples 8 to 9

### <Silicone base material>

The following A-1 to A-5 were used as the silicone base materials. A-1 to A-5 are addition reaction-curable silicones containing an alkenyl group-containing organopolysiloxane (base material) and a hydrogen organopolysiloxane (curing agent), and are a two-component type consisting of a silicone agent A and a silicone agent B. A mixture of the two components is the silicone base material.
A-1: The viscosity V1 is 114 mPa·s, and the weight-average molecular weight Mw1 is 13500.
A-2: The viscosity V1 is 224 mPa·s, and the weight-average molecular weight Mw1 is 20000.
A-3: The viscosity V1 is 252 mPa·s, and the weight-average molecular weight Mw1 is 22000.
A-4: The viscosity V1 is 320 mPa·s, and the weight-average molecular weight Mw1 is 25000.
A-5: The viscosity V1 is 453 mPa·s, and the weight-average molecular weight Mw1 is 29000.

### <Viscosity reducing agent>

Following B-1 to B-4, which are organopolysiloxane compounds with alkoxy groups in the structure represented by the formula (1), and B-5, which is dimethyl silicone, were used.
B-1: In the formula 1, R¹=butyl group, R²=methyl group, R³=ethylene group, R⁵=methyl group, n=20, and m=0. The viscosity V2 is 11 mPa·s and the weight-average molecular weight Mw2 is 1640.
B-2: In the formula (1), R¹=butyl group, R²=methyl group, R³=ethylene group, R⁵=methyl group, n=55, and m=0. The viscosity V2 is 25 mPa·s and the weight-average molecular weight Mw2 is 3500.
B-3: In the formula (1), R¹=butyl group, R²=methyl group, R³=ethylene group, R⁵=methyl group, n=125, and m=0. The viscosity V2 is 68 mPa·s and the weight-average molecular weight Mw2 is 8000.
B-4: In the formula (1), R¹=butyl group, R²=methyl group, R³=ethylene group, R⁵=methyl group, n=219, and m=0. The viscosity V2 is 157 mPa·s and the weight-average molecular weight Mw2 is 14000.
B-5: A dimethyl silicone having a viscosity V2 of 10 mPa·s and a weight-average molecular weight Mw2 of 1100.

### [Example 1]

As shown in Table 2, a thermally conductive composition having the following composition of a formulation 1 with a silicone base material of type A-1 and a viscosity reducing agent of type B-1, was subjected to various evaluations as shown in Table 2.

### <Formulation 1>

Formulation 1, as shown in Table 1, is a two-component type formulation consisting of a first agent and a second agent.

The silicone agent A contains an alkenyl group-containing organopolysiloxane and a small amount of an addition reaction catalyst (platinum catalyst).

The silicone agent B contains an alkenyl group-containing organopolysiloxane and a hydrogen organopolysiloxane.

The first agent comprises 100 parts by mass of a silicone agent A, 17.5 parts by mass of a viscosity reducing agent, 230 parts by mass of a spherical alumina having an average particle size of 0.5 µm, 550 parts by mass of a spherical alumina having an average particle size of 3.0 µm, 160 parts by mass of a spherical alumina having an average particle size of 18 µm, 300 parts by mass of a spherical alumina having an average particle size of 40 µm, and 1100 parts by mass of a spherical alumina having an average particle size of 70 µm.
The second agent comprises 100 parts by mass of a silicone agent B, 17.5 parts by mass of a viscosity reducing agent, 230 parts by mass of a spherical alumina having an average particle size of 0.5 µm, 550 parts by mass of a spherical alumina having an average particle size of 3.0 µm, 160 parts by mass of a spherical alumina having an average particle size of 18 µm, 300 parts by mass of a spherical alumina having an average particle size of 40 µm, and 1100 parts by mass of a spherical alumina having an average particle size of 70 µm.

A thermally conductive composition was prepared by mixing the first agent and the second agent.

### [Examples 2 to 16, and Comparative Examples 1 to 9]

Thermally conductive compositions were prepared in the same manner as in Example 1, except that the type of silicone base material and the type of viscosity reducing agent were changed as shown in Tables 2 to 6. Each evaluation result is shown in Tables 2 to 6.

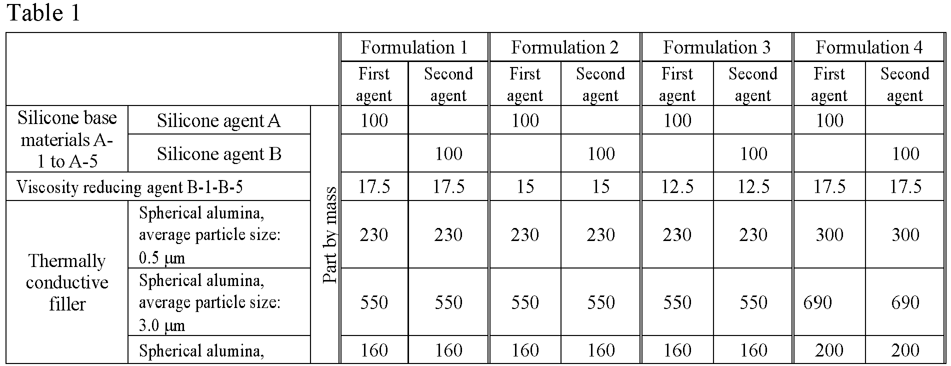

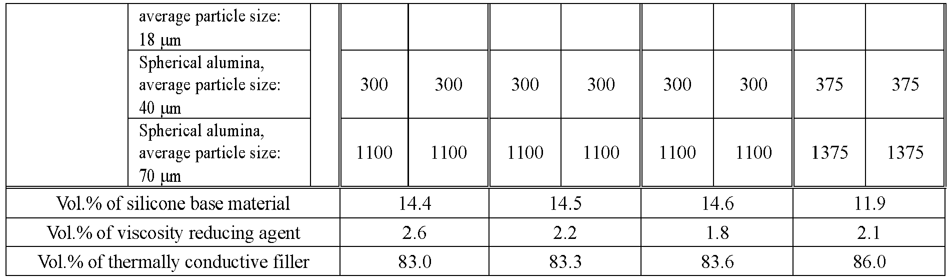

**Table 2**

| | | Example 1 | Example 2 | Example 3 | Example 4 | Comparative Example 1 |
|---|---|---|---|---|---|---|
| Type of formulation | | Formulation 1 | Formulation 1 | Formulation 1 | Formulation 1 | Formulation 1 |
| Type of silicone base material | | A-1 | A-1 | A-1 | A-1 | A-1 |
| Type of viscosity reducing agent | | B-1 | B-2 | B-3 | B-4 | B-5 |
| Viscosity of silicone base material V1 [mPa·s] | | 114 | 114 | 114 | 114 | 114 |
| Viscosity of viscosity reducing agent V2 [mPa·s] | | 11 | 25 | 68 | 157 | 10 |
| Viscosity ratio (V1/V2) | | 10.4 | 4.6 | 1.7 | 0.7 | 11.4 |
| Viscosity of binder [mPa·s] | | 76 | 94 | 104 | 121 | 74 |
| Mw1 of silicone base material | | 13500 | 13500 | 13500 | 13500 | 13500 |
| Mw2 of viscosity reducing agent | | 1640 | 3500 | 8000 | 14000 | 1100 |
| Molecular weight ratio (Mw1/Mw2) | | 8.2 | 3.9 | 1.7 | 1.0 | 12.3 |
| Viscosity of thermally conductive composition [Pa·s] | 1.00 [1/s] | 456 | 263 | 184 | 335 | - |
| | 2.15 [1/s] | 286 | 188 | 125 | 253 | - |
| | 4.64 [1/s] | 180 | 131 | 121 | 231 | - |
| Thixotropic ratio | | 0.39 | 0.54 | 0.66 | 0.69 | - |
| Viscosity of thermally conductive composition/Viscosity of binder | | 6.0 | 2.7 | 1.8 | 2.8 | 13.4 |
| Thermal conductivity [W/m·K] | | 6.0 | 6.0 | 6.0 | 6.0 | - |
| Comprehensive evaluation 1 | | OK | OK | OK | OK | NG |
| Comprehensive evaluation 2 | | 2 | 4 | 5 | 3 | 1 |
| Remarks | | | | | | Unmeasurable due to no formation of paste |

Examples 1 to 4 and Comparative Example 1 in Table 2 relate to the same comparative group, with differences only in the type of viscosity reducing agent in each thermally conductive composition. The thermally conductive composition of each Example, in which the molecular weight ratio between the weight-average molecular weight Mw1 of the silicone base material and the weight-average molecular weight Mw2 of the viscosity reducing agent (Mw1/Mw2) is 0.5 or more and 8.5 or less, had a low viscosity, and the results of comprehensive evaluation 1 and comprehensive evaluation 2 were good. Further, Examples 2 and 3, in which the molecular weight ratio (Mw1/Mw2) is 1.4 or more and 4.5 or less, were highly evaluated with a comprehensive evaluation 2 of 4 or more.
On the other hand, in Comparative Example 1, in which the molecular weight ratio (Mw1/Mw2) is more than 8.5, the viscosity was too high to form a paste, and each evaluation was unavailable.

Furthermore, even with use of a viscosity reducing agent having a low weight-average molecular weight Mw2, the viscosity of the thermally conductive composition causes no decrease corresponding thereto. Accordingly, it can be seen that adjustment of the molecular weight ratio (Mw1/Mw2) to the specific range of the present invention is important.

**Table 3**

| | | Comparative Example 2 | Example 5 | Example 6 | Example 7 | Comparative Example 3 |
|---|---|---|---|---|---|---|
| Type of formulation | | Formulation 1 | Formulation 1 | Formulation 1 | Formulation 1 | Formulation 1 |
| Type of silicone base material | | A-2 | A-2 | A-2 | A-2 | A-2 |
| Type of viscosity reducing agent | | B-1 | B-2 | B-3 | B-4 | B-5 |
| Viscosity of silicone base material V1 [mPa·s] | | 224 | 224 | 224 | 224 | 224 |
| Viscosity of viscosity reducing agent V2 [mPa·s] | | 11 | 25 | 68 | 157 | 10 |
| Viscosity ratio (V1/V2) | | 20.3 | 8.9 | 3.3 | 1.4 | 22.4 |
| Viscosity of binder [mPa·s] | | 132 | 165 | 182 | 210 | 130 |
| Mw1 of silicone base material | | 20000 | 20000 | 20000 | 20000 | 20000 |
| Mw2 of viscosity reducing agent | | 1640 | 3500 | 8000 | 14000 | 1100 |
| Molecular weight ratio (Mw1/Mw2) | | 12.2 | 5.7 | 2.5 | 1.4 | 18.2 |
| Viscosity of thermally conductive composition [Pa·s] | 1.00 [1/s] | 637 | 443 | 350 | 305 | 930 |
| | 2.15 [1/s] | 369 | 283 | 258 | 264 | 444 |
| | 4.64 [1/s] | 238 | 211 | 188 | 210 | 152 |
| Thixotropic ratio | | 0.37 | 0.47 | 0.54 | 0.69 | 0.16 |
| Viscosity of thermally conductive composition/Viscosity of binder | | 4.8 | 2.5 | 1.9 | 1.5 | 7.2 |
| Thermal conductivity [W/m·K] | | 6.0 | 6.0 | 6.0 | 6.0 | 6.0 |
| Comprehensive evaluation 1 | | NG | OK | OK | OK | NG |
| Comprehensive evaluation 2 | | 1 | 3 | 4 | 5 | 1 |
| Remarks | | | | | | |

Examples 5 to 7 and Comparative Examples 2 to 3 in Table 3 relate to the same comparative group, with differences only in the type of viscosity reducing agent in each thermally conductive composition. The thermally conductive composition of each Example, in which the molecular weight ratio between the weight-average molecular weight Mw1 of the silicone base material and the weight-average molecular weight Mw2 of the viscosity reducing agent (Mw1/Mw2) is 0.5 or more and 8.5 or less, had a low viscosity, and the results of comprehensive evaluation 1 and comprehensive evaluation 2 were good. Further, Examples 6 and 7, in which the molecular weight ratio (Mw1/Mw2) is 1.4 or more and 4.5 or less, were highly evaluated with a comprehensive evaluation 2 of 4 or more.

On the other hand, in Comparative Examples 2 and 3, in which the molecular weight ratio (Mw1/Mw2) is more than 8.5, the results of comprehensive evaluation 1 and comprehensive evaluation 2 were poorer than those in each Example.

Furthermore, even with use of a viscosity reducing agent having a low weight-average molecular weight Mw2, the viscosity of the thermally conductive composition causes no decrease corresponding thereto. Accordingly, it can be seen that adjustment of the molecular weight ratio (Mw1/Mw2) to the specific range of the present invention is important.

**Table 4**

| | | Comparative Example 4 | Example 8 | Example 9 | Example 10 | Comparative Example 5 |
|---|---|---|---|---|---|---|
| Type of formulation | | Formulation 1 | Formulation 1 | Formulation 1 | Formulation 1 | Formulation 1 |
| Type of silicone base material | | A-3 | A-3 | A-3 | A-3 | A-3 |
| Type of viscosity reducing agent | | B-1 | B-2 | B-3 | B-4 | B-5 |
| Viscosity of silicone base material V1 [mPa·s] | | 252 | 252 | 252 | 252 | 252 |
| Viscosity of viscosity reducing agent V2 [mPa·s] | | 11 | 25 | 68 | 157 | 10 |
| Viscosity ratio (V1/V2) | | 22.9 | 10.1 | 3.7 | 1.6 | 25.2 |
| Viscosity of binder [mPa·s] | | 146 | 182 | 200 | 232 | 143 |
| Mw1 of silicone base material | | 22000 | 22000 | 22000 | 22000 | 22000 |
| Mw2 of viscosity reducing agent | | 1640 | 3500 | 8000 | 14000 | 1100 |
| Molecular weight ratio (Mw1/Mw2) | | 13.4 | 6.3 | 2.8 | 1.6 | 20.0 |
| Viscosity of thermally conductive composition [Pa·s] | 1.00 [1/s] | 677 | 456 | 370 | 338 | 906 |
| | 2.15 [1/s] | 395 | 291 | 273 | 283 | 513 |
| | 4.64 [1/s] | 239 | 210 | 194 | 219 | 247 |
| Thixotropic ratio | | 0.35 | 0.46 | 0.52 | 0.65 | 0.27 |
| Viscosity of thermally conductive composition/Viscosity of binder | | 4.6 | 2.5 | 1.8 | 1.5 | 6.3 |
| Thermal conductivity [W/m·K] | | 6.0 | 6.0 | 6.0 | 6.0 | 6.0 |
| Comprehensive evaluation 1 | | NG | OK | OK | OK | NG |
| Comprehensive evaluation 2 | | 1 | 3 | 4 | 5 | 1 |
| Remarks | | | | | | |

Examples 8 to 10 and Comparative Examples 4 to 5 in Table 4 relate to the same comparative group, with differences only in the type of viscosity reducing agent in each thermally conductive composition. The thermally conductive composition of each Example, in which the molecular weight ratio between the weight-average molecular weight Mw1 of the silicone base material and the weight-average molecular weight Mw2 of the viscosity reducing agent (Mw1/Mw2) is 0.5 or more and 8.5 or less, had a low viscosity, and the results of comprehensive evaluation 1 and comprehensive evaluation 2 were good. Further, Examples 9 and 10, in which the molecular weight ratio (Mw1/Mw2) is 1.4 or more and 4.5 or less, were highly evaluated with a comprehensive evaluation 2 of 4 or more.
On the other hand, in Comparative Examples 4 and 5, in which the molecular weight ratio (Mw1/Mw2) is more than 8.5, the results of comprehensive evaluation 1 and comprehensive evaluation 2 were poorer than those in each Example.

Furthermore, even with use of a viscosity reducing agent having a low weight-average molecular weight Mw2, the viscosity of the thermally conductive composition causes no decrease corresponding thereto. Accordingly, it can be seen that adjustment of the molecular weight ratio (Mw1/Mw2) to the specific range of the present invention is important.

**Table 5**

| | | Comparative Example 6 | Example 11 | Example 12 | Example 13 | Comparative Example 7 |
|---|---|---|---|---|---|---|
| Type of formulation | | Formulation 1 | Formulation 1 | Formulation 1 | Formulation 1 | Formulation 1 |
| Type of silicone base material | | A-4 | A-4 | A-4 | A-4 | A-4 |
| Type of viscosity reducing agent | | B-1 | B-2 | B-3 | B-4 | B-5 |
| Viscosity of silicone base material V1 [mPa·s] | | 320 | 320 | 320 | 320 | 320 |
| Viscosity of viscosity reducing agent V2 [mPa·s] | | 11 | 25 | 68 | 157 | 10 |
| Viscosity ratio (V1/V2) | | 29.1 | 12.8 | 4.7 | 2.0 | 32.0 |
| Viscosity of binder [mPa·s] | | 177 | 221 | 244 | 283 | 174 |
| Mw1 of silicone base material | | 25000 | 25000 | 25000 | 25000 | 25000 |
| Mw2 of viscosity reducing agent | | 1640 | 3500 | 8000 | 14000 | 1100 |
| Molecular weight ratio (Mw1/Mw2) | | 15.2 | 7.1 | 3.1 | 1.8 | 22.7 |
| Viscosity of thermally conductive composition [Pa·s] | 1.00 [1/s] | 819 | 513 | 441 | 404 | 874 |
| | 2.15 [1/s] | 475 | 329 | 330 | 334 | 561 |
| | 4.64 [1/s] | 302 | 244 | 256 | 274 | 322 |
| Thixotropic ratio | | 0.37 | 0.49 | 0.58 | 0.68 | 0.37 |
| Viscosity of thermally conductive composition/Viscosity of binder | | 4.6 | 2.4 | 1.8 | 1.4 | 5.0 |
| Thermal conductivity [W/m·K] | | 6.0 | 6.0 | 6.0 | 6.0 | 6.0 |
| Comprehensive evaluation 1 | | NG | OK | OK | OK | NG |
| Comprehensive evaluation 2 | | 1 | 3 | 4 | 5 | 1 |
| Remarks | | | | | | |

Examples 11 to 13 and Comparative Examples 6 to 7 in Table 5 relate to the same comparative group, with differences only in the type of viscosity reducing agent in each thermally conductive composition. The thermally conductive composition of each Example, in which the molecular weight ratio between the weight-average molecular weight Mw1 of the silicone base material and the weight-average molecular weight Mw2 of the viscosity reducing agent (Mw1/Mw2) is 0.5 or more and 8.5 or less, had a low viscosity, and the results of comprehensive evaluation 1 and comprehensive evaluation 2 were good. Further, Examples 12 and 13, in which the molecular weight ratio (Mw1/Mw2) is 1.4 or more and 4.5 or less, were highly evaluated with a comprehensive evaluation 2 of 4 or more.
On the other hand, in Comparative Examples 6 and 7, in which the molecular weight ratio (Mw1/Mw2) is more than 8.5, the results of comprehensive evaluation 1 and comprehensive evaluation 2 were poorer than those in each Example.

Furthermore, even with use of a viscosity reducing agent having a low weight-average molecular weight Mw2, the viscosity of the thermally conductive composition causes no decrease corresponding thereto. Accordingly, it can be seen that adjustment of the molecular weight ratio (Mw1/Mw2) to the specific range of the present invention is important.

**Table 6**

| | | Comparative Example 8 | Example 14 | Example 15 | Example 16 | Comparative Example 9 |
|---|---|---|---|---|---|---|
| Type of formulation | | Formulation 1 | Formulation 1 | Formulation 1 | Formulation 1 | Formulation 1 |
| Type of silicone base material | | A-5 | A-5 | A-5 | A-5 | A-5 |
| Type of viscosity reducing agent | | B-1 | B-2 | B-3 | B-4 | B-5 |
| Viscosity of silicone base material V1 [mPa·s] | | 453 | 453 | 453 | 453 | 453 |
| Viscosity of viscosity reducing agent V2 [mPa·s] | | 11 | 25 | 68 | 157 | 10 |
| Viscosity ratio (V1/V2) | | 41.2 | 18.1 | 6.7 | 2.9 | 45.3 |
| Viscosity of binder [mPa·s] | | 236 | 295 | 325 | 376 | 232 |
| Mw1 of silicone base material | | 29000 | 29000 | 29000 | 29000 | 29000 |
| Mw2 of viscosity reducing agent | | 1640 | 3500 | 8000 | 14000 | 1100 |
| Molecular weight ratio ( Mw1/Mw2) | | 17.7 | 8.3 | 3.6 | 2.1 | 26.4 |
| Viscosity of thermally conductive composition [Pa·s] | 1.00 [1/s] | 875 | 599 | 508 | 456 | 985 |
| | 2.15 [1/s] | 502 | 435 | 374 | 381 | 618 |
| | 4.64 [1/s] | 321 | 295 | 288 | 320 | 358 |
| Thixotropic ratio | | 0.37 | 0.52 | 0.57 | 0.70 | 0.36 |
| Viscosity of thermally conductive composition/Viscosity of binder | | 3.7 | 2.0 | 1.6 | 1.2 | 4.2 |
| Thermal conductivity [W/m·K] | | 6.0 | 6.0 | 6.0 | 6.0 | 6.0 |
| Comprehensive evaluation 1 | | NG | OK | OK | OK | NG |
| Comprehensive evaluation 2 | | 1 | 3 | 4 | 5 | 1 |
| Remarks | | | | | | |

Examples 14 to 16 and Comparative Examples 8 to 9 in Table 6 relate to the same comparative group, with differences only in the type of viscosity reducing agent in each thermally conductive composition. The thermally conductive composition of each Example, in which the molecular weight ratio between the weight-average molecular weight Mw1 of the silicone base material and the weight-average molecular weight Mw2 of the viscosity reducing agent (Mw1/Mw2) is 0.5 or more and 8.5 or less, had a low viscosity, and the results of comprehensive evaluation 1 and comprehensive evaluation 2 were good. Further, Examples 15 and 16, in which the molecular weight ratio (Mw1/Mw2) is 1.4 or more and 4.5 or less, were highly evaluated with a comprehensive evaluation 2 of 4 or more.
On the other hand, in Comparative Examples 8 and 9, in which the molecular weight ratio (Mw1/Mw2) is more than 8.5, the results of comprehensive evaluation 1 and comprehensive evaluation 2 were poorer than those in each Example.

Furthermore, even with use of a viscosity reducing agent having a low weight-average molecular weight Mw2, the viscosity of the thermally conductive composition causes no decrease corresponding thereto. Accordingly, it can be seen that adjustment of the molecular weight ratio (Mw1/Mw2) to the specific range of the present invention is important.

Thermally conductive compositions of Examples 17 to 21 and Comparative Examples 10 to 11 in the following, which have formulations different from those of Examples 1 to 16 and Comparative Examples 1 to 9 described above, were evaluated.

### [Examples 17 to 21 and Comparative Examples 10 to 11]

Thermally conductive compositions were prepared according to the types of silicone base material, the types of viscosity reducing agent, and the types of formulation of thermally conductive compositions as shown in Table 7, and evaluated.
Formulations 2 to 4 are as shown in Table 1.

**Table 7**

| | | Example 17 | Example 18 | Comparative Example 10 | Example 19 | Example 20 | Example 21 | Comparative Example 11 |
|---|---|---|---|---|---|---|---|---|
| Type of formulation | | Formulation 2 | Formulation 3 | Formulation 4 | Formulation 4 | Formulation 4 | Formulation 4 | Formulation 4 |
| Type of silicone base material | | A-4 | A-4 | A-4 | A-4 | A-4 | A-4 | A-4 |
| Type of viscosity reducing agent | | B-3 | B-3 | B-1 | B-2 | B-3 | B-4 | B-5 |
| Viscosity of silicone base material V1 [mPa·s] | | 320 | 320 | 320 | 320 | 320 | 320 | 320 |
| Viscosity of viscosity reducing agent V2 [mPa·s] | | 68 | 68 | 11 | 25 | 68 | 157 | 10 |
| Viscosity ratio (V1/V2) | | 4.7 | 4.7 | 29.1 | 12.8 | 4.7 | 2.0 | 32.0 |
| Viscosity of binder [mPa·s] | | 244 | 244 | 177 | 221 | 244 | 283 | 174 |
| Mw1 of silicone base material | | 25000 | 25000 | 25000 | 25000 | 25000 | 25000 | 25000 |
| Mw2 of viscosity reducing agent | | 8000 | 8000 | 1640 | 3500 | 8000 | 14000 | 1100 |
| Molecular weight ratio (Mw1/Mw2) | | 3.1 | 3.1 | 15.2 | 7.1 | 3.1 | 1.8 | 22.7 |
| Viscosity of thermally conductive composition [Pa·s] | 1.00 [1/s] | 479 | 518 | 1454 | 1096 | 986 | 1186 | - |
| | 2.15 [1/s] | 337 | 366 | - | 599 | 620 | 819 | - |
| | 4.64 [1/s] | 256 | 289 | - | 312 | 444 | 512 | - |
| Thixotropic ratio | | 0.53 | 0.56 | - | 0.28 | 0.45 | 0.43 | - |
| Viscosity of thermally conductive composition/Viscosity of binder | | 2.0 | 2.1 | 8.2 | 5.0 | 4.0 | 4.2 | - |
| Thermal conductivity [W/m·K] | | 6.1 | 6.2 | 7.0 | 7.0 | 7.0 | 7.0 | - |
| Parts by mass of viscosity reducing agent relative to 100 parts by mass of base material | | 15.0 | 12.5 | 17.5 | 17.5 | 17.5 | 17.5 | 17.5 |
| Vol.% of thermally conductive filler | | 83.3 | 83.6 | 86.0 | 86.0 | 86.0 | 86.0 | 86.0 |
| Remarks | | | | | | | | Unmeasurab le due to no formation of paste |

Examples 17 and 18 are examples in which the thermally conductive compositions were prepared with a smaller amount of the viscosity reducing agent compared to that in Example 12. It can be seen that in Examples 17 and 18 also, thermally conductive compositions having low viscosity were obtained.

Examples 19 to 21 and Comparative Examples 10 to 11 are examples having an increased content of the thermally conductive filler. Even in this case, the thermally conductive compositions of Examples 19 to 21, in which the molecular weight ratio (Mw1/Mw2) is 0.5 or more and 8.5 or less, had lower viscosity in comparison to those of Comparative Examples 10 to 11, in which the molecular weight ratio (Mw1/Mw2) is more than 8.5. Incidentally, in Comparative Example 10, the viscosity was unable to be measured appropriately at a shear rate of 2.15 (1/s) or more, due to extremely high fluidity. In Comparative Example 11, the viscosity was too high to form a paste, and each evaluation was unavailable.

## Claims

1. A thermally conductive composition comprising a silicone base material, a viscosity reducing agent, and a thermally conductive filler, wherein a molecular weight ratio between a weight-average molecular weight Mw1 of the silicone base material and a weight-average molecular weight Mw2 of the viscosity reducing agent (Mw1/Mw2) is 0.5 or more and 8.5 or less.

2. The thermally conductive composition according to claim 1, wherein the silicone base material comprises an alkenyl group-containing organopolysiloxane and a hydrogen organopolysiloxane.

3. The thermally conductive composition according to claim 1 or 2, wherein the viscosity reducing agent is a compound having an alkoxy group.

4. The thermally conductive composition according to any one of claims 1 to 3, wherein the viscosity reducing agent has a structure represented by the following formula (1): 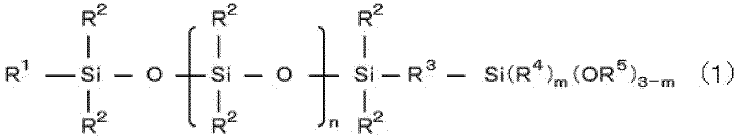 wherein R¹, R², R⁴ and R⁵ are each independently a saturated hydrocarbon group, R³ is an oxygen atom or a divalent hydrocarbon group, n is an integer of 15 to 315, and m is an integer of 0 to 2.

5. The thermally conductive composition according to any one of claims 1 to 4, wherein the silicone base material has a weight-average molecular weight Mw1 of 10000 to 30000.

6. The thermally conductive composition according to any one of claims 1 to 5, wherein the viscosity reducing agent has a weight-average molecular weight Mw2 of 1150 to 20000.

7. The thermally conductive composition according to any one of claims 1 to 6, wherein the thermally conductive composition has a thermal conductivity of 6 W/m·K or more.

8. A cured product obtained by curing the thermally conductive composition according to any one of claims 1 to 7.
